# EUROPEAN PATENT SPECIFICATION

(11) **EP 2 112 341 B1**
(45) Date of publication and mention of the grant of the patent: **11.07.2018**
(21) Application number: 09005153.3
(22) Date of filing: 08.04.2009
(51) Int. Cl.: F01N 3/20, F01N 3/02

(54) **Method for purification of an exhaust gas from a diesel engine**
Verfahren zum Reinigen des Abgases eines Dieselmotors
Procédé de purification de gaz d'échappement d'un moteur Diesel

(30) Priority: 22.04.2008 DK 200800575
(43) Date of publication of application: 28.10.2009
(73) Proprietor: Umicore AG & Co. KG, 63457 Hanau-Wolfgang (DE)
(72) Inventor: Gekas, Ioannis, 215 74 Malmö (DK)

(56) References cited:
- EP-A- 0 351 057
- WO-A-2004/025096
- DE-A1-102006 009 934
- US-A1- 2007 277 507
- US-A1- 2008 066 451

## Description

The invention relates to a method for purification of an exhaust gas from an internal combustion engine.

The invention is specifically directed to cleaning of an exhaust gas from a diesel engine, especially engines in vehicles, which often start with cold engine and cold exhaust gas system.

Processes for purifying exhaust gas are already known. In the process of US 2007/0289289 exhaust gas is purified by catching particles in a filter followed by reduction of nitrogen oxides and thereafter by catalytic oxidation of impurities in the exhaust gas. However, if some nitrogen oxides pass the reducing catalyst, they are oxidised in the subsequent step and escape to the atmosphere as NO₂. Further, if excess of a reductant is added, some of it may pass the oxidation catalyst and escape to the atmosphere.

In the process of US 2007/0160508 fuel is injected upstream of a pre-stage oxidation catalyst, in which NO₂ is formed. NO₂ is used in the subsequent filter for oxidising soot particles. Remaining NOₓ is reduced by a reductant in the subsequent selective reducing catalyst, before the exhaust gas passes a post-stage oxidation catalyst, which converts CO to CO₂. In this process four different catalysts are needed.

Gas is led from a combustion engine to a diesel particulate filter in the process disclosed in US 2007/0089403, where the filter is coated with an oxidation / NOₓ storage catalyst. After injection of a reductant the gas passes a hydrolysis catalyst before entering a selective reduction catalyst, after which it passes an ammonia guard catalyst and streams to the atmosphere. This process is a little complicated, the gas to the selective reduction is not sufficiently hot and must pass a hydrolysis catalyst before entering the reduction catalyst, after which an ammonia guard catalyst is needed.

US 2006/0107649 discloses an exhaust gas cleaning process, where NOₓ is reduced, particles are caught in a filter and CO, hydrocarbons and NOₓ are thereafter oxidised. However, no additional heat can be added to the filter to burn off caught soot and particulate matter.

The process of US patent No. 6,892,529 comprises hydrogen injection, catalytic oxidation, hydrogen injection, removing particles in a filter, hydrogen injection, urea injection, hydrolysis, selective reduction of NOₓ and oxidation of CO and remaining hydrocarbons. A disadvantage of this process is that hydrogen is not easy to handle on board a vehicle.

Exhaust gas is cleaned in two parallel trains in the process disclosed in US patent No. 6,823,660. In each train the gas passes an oxidation catalyst, a diesel particulate filter and a selectively reducing catalyst. This process does not supply sufficient heat for regeneration of the filter and control of NOₓ reduction.

Reduction and subsequent oxidation of impurities in exhaust gas are comprised in the process of US patent No. 5,431,893. Reductant is injected to the exhaust gas up-stream of a pyrolysation channel, a mixing channel and a reduction catalyst. The temperature of the oxidation catalyst cannot be adjusted, and particles may block the filter or pass through the filter. The exhaust gas treatment system disclosed in DE 10 2006 009934 A1 adjusts operational temperatures of the NOₓ catalyst and particle filter independently of the engine exhaust gas temperature. The problem of the known processes is that they are either rather complicated or do not provide a thorough removal of both NOₓ, CO, remains of hydrocarbons, particulate matter and soot, especially not just after start of a cold engine. The problem of known technique is solved by the present invention.

The invention provides a method, according to claim 1, for removing impurities in exhaust gas from a diesel engine, where the impurities comprise nitrogen oxides, carbon monoxide, particulate matter and incompletely combusted hydrocarbons. The method comprises the steps of injection in excess compared to stoichiometric ratio of a reductant comprising urea or ammonia into the exhaust gas from the engine, selective catalytic reduction of the nitrogen oxides in the exhaust gas by the reductant in the presence of a catalyst active in selective reduction of nitrogen oxides to nitrogen and intermittent injection of a hydrocarbon into this effluent. The succeeding steps are oxidation of carbon monoxide, particulate matter, incompletely combusted hydrocarbons and injected hydrocarbon in the presence of a catalyst active in oxidising carbon monoxide, particulate matter and hydrocarbons, to carbon dioxide and water, and in selectively oxidising possible excess of reductant to free nitrogen, and filtration of the effluent by passing the gas through a catalysed filter, wherein the remaining particulate matter is retained in the filter, and wherein the catalyst is active in oxidising carbon monoxide, particulate matter and hydrocarbons to carbon dioxide and water, and in selectively oxidising reductant to nitrogen creating a purified exhaust gas.
In another embodiment of the invention the method further comprises the step of a pre-oxidation of carbon monoxide, particulate matter, nitrogen oxides and incompletely combusted hydrocarbons in the exhaust gas from the engine in the presence of a catalyst active in oxidising the carbon monoxide, nitrogen oxides, hydrocarbons and particulate matter to carbon dioxide, nitrogen dioxide and water prior to the injection of reductant.
Thereby exhaust gas from a diesel engine is very thoroughly cleaned by a very simple system, also reasonably fast after start of a cold engine.
FIG 1 is a schematic drawing showing one example of an exhaust treatment system to apply the method of the invention.
FIG 2 is a schematic drawing showing another example of an exhaust treatment system to apply the method of the invention.
FIG 3 is a print-out from measurement of pressure drop across diesel particle filter during test.

Diesel engines operate with excess air and their exhaust gasses comprise nitrogen oxides, NOₓ, carbon monoxide, CO, particulate matter and incompletely combusted hydrocarbons, which all implement health risk.

The present invention provides a method, wherein nitrogen oxides are catalytically, selectively reduced to free nitrogen. Subsequently CO and incompletely combusted hydrocarbons are oxidised. Finally, particulate matter is caught and remaining CO and incompletely combusted hydrocarbons are oxidised in a filter. These reactions take place in an optimal way, when the exhaust gas and the system are heated up to 250-500°C.
Optionally, the exhaust gas from the diesel engine is passed to a pre-oxidising catalyst, where a considerable part of carbon monoxide, unburned hydrocarbons, particulate matter, and NOₓ is oxidised to carbon dioxide, water and NO₂ upstream of the selective, catalytic reduction of NOₓ.

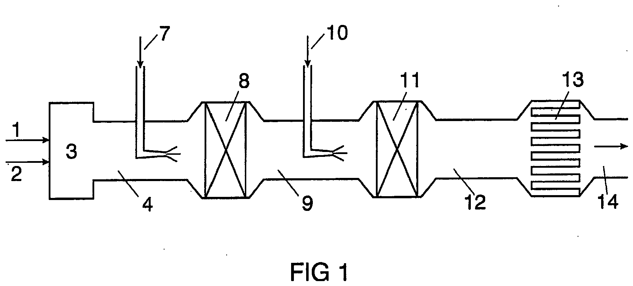

In this case the reduction catalyst can be a zeolites catalyst.
The invention is described in more detail by the drawings. FIG 1 illustrates one exhaust treatment system to apply the method of the invention, where fuel 1 is combusted with air 2 in combustion engine 3, and the formed exhaust gas 4 is mixed with injected reductant 7. A preferred reductant is an aqueous solution of urea, which disintegrates to ammonia and carbon dioxide at and above 200°C. This mixed gas flows to a Selective, Catalytic Reduction, SCR, catalyst 8, which promotes reduction of nitrogen oxides by the reductant, ammonia, resulting in free nitrogen and water.

The catalyst for selective reduction can be a mixture of base metal oxides as the active phase supported on a carrier of one or more metal oxides. The base metals are chosen from vanadium, tungsten, cerium and manganese, and the preferred catalysts are vanadium and tungsten oxide supported on titania or alumina or ceria, or cerium oxide/tungsten oxide supported on titania or alumina, or manganese oxide supported on titania or alumina or ceria. Alternatively, the catalyst for selective reduction can be a zeolite, especially an ion exchanged zeolite supported on an inert substrate, preferably cordierite, and the preferred zeolites is copper and/or iron exchanged beta or ZSM-5 zeolite. The catalyst will typically be in the form of a monolithic structure but can also be in the form of foam or metal mesh.

The reductant might also be ammonia or an aqueous solution of ammonia. The reductant can be added in a slight excess compared to stoichiometric ratio, which ensures a very high degree of conversion of the poisonous nitrogen oxides to free nitrogen.

Hydrocarbon 10 is intermittently injected into SCR effluent 9, when needed for increasing the temperature. The hydrocarbon can be diesel fuel. This exhaust gas flows to a Diesel Oxidation Catalyst, DOC, 11 where a substantial part of the CO and incompletely combusted hydrocarbons and particulate matter are oxidised to water and carbon dioxide. Excess of ammonia is selectively oxidised to free nitrogen. In this way, the DOC 11 also acts as an ammonia slip guard.

The oxidation catalyst is a precious metal(s) catalyst on metal oxide carriers such as aluminium oxide, cerium oxide, zirconium oxide titanium oxide or a zeolite. The requirement to the amount of the noble metal is low. Precious metals are platinum, palladium or rhodium, which are present as mixtures or as single precious elements, where platinum and palladium are the preferred metals, preferably on a titania support.

The precious metals can also be substituted by base metals, typically manganese, copper, cobalt and chromium.

The DOC catalyst will typically be in the form of a monolithic structure, but can also be in the form of foam or metal mesh.

Both the amount of reductant and of hydrocarbon is monitored by the electronic computing unit. This can both be a separate CPU or the CPU of the engine.

The nearly purified exhaust gas 12 flows to a catalysed Diesel Particulate Filter, c-DPF, 13. Particulate matter is caught in the filter and the catalyst on the surface of the filter promotes the oxidation of the particles as well as the selective oxidation of remaining ammonia, carbon monoxide and hydrocarbons.

The catalyst is a Pt-free coat on the filter, which can be a cordierite filter. The coat is a metal oxide acting as a carrier for a precious metal different from platinum, where the preferred precious metal is palladium. The carrier coat is an oxide of cerium, zirconium, aluminium or titanium, where the preferred oxide is titania.

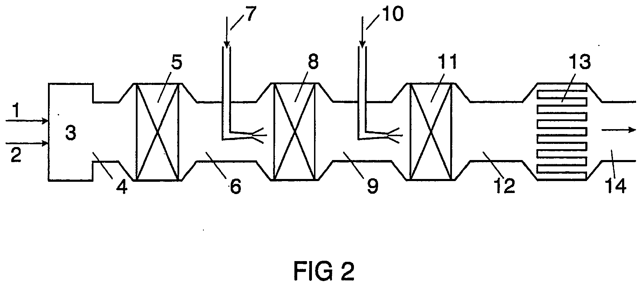

The amount of hydrocarbons 10 injected up-stream of DOC 11 will influence the temperature not only in the DOC 11, but also in the c-DPF 13 as well and thereby enhance combustion of collected particles by the increased temperature of c-DPF.
By the exhaust gas cleaning process of the invention, the catalyst 8 for SCR is readily heated by warm exhaust gas coming directly from the engine to the temperature, where urea is disintegrated to ammonia and where nitrogen oxides are reduced.
Further, a very high degree of removal of nitrogen oxides can be obtained, as it is possible to inject excess of urea/ammonia reductant, and without high requirement of accuracy of injected amount, because slip of ammonia is oxidised to nitrogen not only by the DOC 11, but also by the c-DPF 13.
Thereby, the content of impurities in the purified exhaust gas stream 14 is extremely low, when it leaves the system. FIG 2 shows another exhaust gas treatment system to apply the method of the invention. Fuel 1 is combusted by air 2 in diesel engine 3 and the formed exhaust gas 4 flows to a pre-oxidising catalyst 5, where a substantial part of CO, NO, particulate matter and remaining HC are oxidised, before this pre-oxidised exhaust gas 6 is mixed with reductant 7 and flows to SCR catalyst 8, where nitrogen oxides are reduced to free nitrogen. The NOₓ free exhaust gas 9 is further cleaned in the same way as in the process described by FIG 1. With this method it is obtained that the formed nitrogen dioxide supports the selective, catalytic reduction of nitrogen oxides to free nitrogen and that a zeolite catalyst can be used for the SCR reaction.
The pre-oxidising catalyst 5 consists of precious metals on one or more metal oxide carriers as aluminium oxide, cerium oxide, zirconium oxide titanium oxide or a zeolite where the requirement to the amount of the noble metal is low. This catalyst shall have the ability to oxidise NO to NO₂ besides the ability to oxidise carbon monoxide and hydrocarbons to carbon dioxide and water. A preferred catalyst is a mixture of the precious metals platinum and palladium on aluminium oxide / cerium oxide carrier. The precious metals can be mixtures or single precious elements. The precious metals may be substituted by base metals including manganese, copper, cobalt and chromium.
The pre-DOC catalyst will typically be in the form of a monolithic structure but can also be in the form of foam or metal mesh.

The method of the invention is useful for systems for purifying exhaust gas from diesel engines, especially engines installed in cars, vans, vehicles, trains, vessels and power plants.

The performance of a system consisting of SCR+DOC+c-DPF catalysts was evaluated in an Engine test bench on a Scania 12-1 Euro II engine through European transient test cycles, ETC.

The amount of injected urea solution was varied as shown in Table 2, whereas no hydrocarbon was injected upstream of the DOC.

Finally, the exhaust gas was passed through catalysed DPF.

The catalysts used for the evaluation were from current Haldor Topsøe A/S development:
- DNXV standard SCR catalyst - vanadium based
- Hi-DOC - Pt/TiO₂ oxidation catalyst
- BMC-211 coated cordierite DPF

Further specifications of SCR, DOC and DPF are given in Table 1.

**Table 1**

| | Size | Volume (litres) | Catalyst to cylinder ratio | Composition |
|---|---|---|---|---|
| DNXV SCR | ø12.7"x295mm | 24 | 2 | V₂O₅/WO₃ on TiO₂ |
| DOC | ø10.5"x100mm | 5.6 | 0.46 | Pt/TiO₂ |
| DPF | ø10.5"x12" | 17 | 1.42 | BMC-211: Pt-free coat on cordierite filter |

The measured concentrations of impurities and the temperature in the streams are given in Table 2.

**Table 2**

| | Urea inj [g] | CO [g/kWh] | NOₓ [g/kWh] | HC [g/kWh] | Max NH₃ [ppm] | CO conv [%] | Noₓ conv [%] | HC conv [%] |
|---|---|---|---|---|---|---|---|---|
| Upstream SCR 1 | 0 | 3.26 | 10.14 | 3.88 | 0.00 | | | |
| Upstream SCR 2 | 0 | 3.82 | 10.17 | 4.19 | 0.00 | | | |
| Downstream SCR | 0 | 3.16 | 10.85 | 0.02 | 0.00 | 3 | -7 | 99 |
| Downstream DOC | 0 | 0.20 | 10.58 | 0.03 | 0.00 | 94 | -4 | 99 |
| Downstream Filter | 0 | 0.14 | 9.88 | 0.00 | 0.00 | 96 | 3 | 100 |
| Downstream SCR | 586 | 3.40 | 4.09 | 0.02 | 9.56 | -4 | 60 | 100 |
| Downstream SCR | 809 | 3.33 | 1.85 | 0.02 | 17.96 | -2 | 82 | 100 |
| Downstream SCR | 929 | 3.41 | 0.98 | 0.03 | 159.00 | -5 | 90 | 99 |
| Downstream SCR | 1 033 | 3.17 | 0.52 | 0.03 | 392.06 | 3 | 95 | 99 |
| Downstream SCR | 1 169 | 3.39 | 0.57 | 0.03 | 473.00 | -4 | 94 | 99 |
| Downstream SCR | 1 307 | 3.27 | 0.40 | 0.03 | 643.00 | 0 | 96 | 99 |
| Downstream DOC | 815 | 0.21 | 1.82 | -0.01 | 3.29 | 93 | 82 | 100 |
| Downstream Filter | 813 | 0.15 | 1.71 | -0.01 | 3.44 | 96 | 83 | 100 |
| Downstream DOC | 925 | 0.18 | 1.26 | 0.01 | 3.09 | 95 | 88 | 100 |
| Downstream Filter | 902 | 0.40 | 1.31 | 0.01 | 7.32 | 88 | 87 | 100 |
| Downstream DOC | 1 041 | 0.19 | 1.29 | 0.01 | 3.86 | 94 | 87 | 100 |
| Downstream Filter | 1 042 | 0.17 | 1.24 | 0.07 | 4.39 | 95 | 88 | 98 |

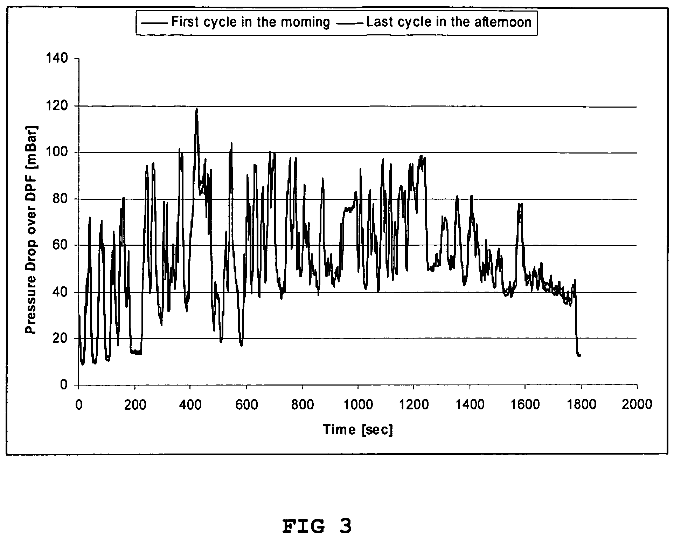

The efficiency of removal of particulate matter was determined as build-up of pressure drop across the filter and given in FIG 3.

The allowed values for emissions from trucks in Europe are given in Table 3.

**Table 3**

| European legislation based on the European Transient Cycle (ETC). | | | | | | | |
|---|---|---|---|---|---|---|---|
| Euro VI is a proposal of 2007.12.21. | | | | | | | |
| All units are in g/kWh | | | | | | | |
| Tier | Date | Test | CO | NMHC | CH4 | NOₓ | PM |
| Euro III | 2000.10 | ETC | 5.45 | 0.78 | 1.6 | 5.0 | 0.16 |
| Euro IV | 2005.10 | | 4.0 | 0.55 | 1.1 | 3.5 | 0.03 |
| Euro V | 2008.10 | | 4.0 | 0.55 | 1.1 | 2.0 | 0.03 |
| Euro VI | 2013.04 | | 4.0 | 0.16 | 0.5 | 0.4 | 0.01 |

The test results show clearly that particulate matter is oxidised, as it can be seen in FIG 3 that the pressure drop across the c-DPF does not increase during operation, as shown.

From Table 2 it is seen that the HC, CO and NOx conversions are excellent and that the NOₓ emission in the outlet exhaust stream 14 is very low. The main reason for the high NOx conversion is the NH₃/NOx ratio can be maintained at a high value as the potential NH₃ slip is selectively oxidised both on the DOC 11 and on the catalytic coated filter 13.

A comparison between the limits of present legislation in Table 3 and test results shows:
The obtained 1.24-1.71 g/kWh NOₓ is lower than 2.0 (2008)
The obtained 0.15-0.40 g/kWh CO is lower than 4.0 (2008)
The obtained 0-0.07 g/kWh HC is lower than 1.1 (2008).

The above clearly demonstrates that the legislation is fulfilled.

The engine, which was used for the tests, was an old engine and the emission of impurities was much higher that the emission from modern engines. The purification system of the invention will easily fulfil future Euro VI requirements for limits of emissions from modern vehicles.

## Claims

1. A method for removing impurities in exhaust gas from a diesel engine, where the impurities comprise nitrogen oxides, carbon monoxide, particulate matter and incompletely combusted hydrocarbons,
which method comprises the steps of
(a) injection of a reductant comprising urea or ammonia into the exhaust gas from the engine;
(b) reduction of the nitrogen oxides in the exhaust gas by the reductant in the presence of a catalyst for selective reduction being active in selective reduction of nitrogen oxides to nitrogen;
(c) intermittent injection of a hydrocarbon into the effluent from step (b)
(d) oxidation of carbon monoxide, particulate matter, incompletely combusted hydrocarbons and injected hydrocarbon in the presence of an oxidation catalyst active in oxidising carbon monoxide, particulate matter and hydrocarbons, to carbon dioxide and water, and the oxidation catalyst also being active in selectively oxidising possible excess of reductant to free nitrogen;
(e) filtration of the Effluent from step (d) by passing the gas through a filter on which a catalyst is coated, wherein the remaining particulate matter is retained in the filter, and wherein the catalyst coated on the filter is active in oxidising carbon monoxide, particulate matter and hydrocarbons to carbon dioxide and water, creating a purified exhaust gas; and
(f) withdrawal of the purified exhaust gas;
**characterized in that** the catalyst coated on the filter also being active in selectively oxidizing possible excess of reductant to nitrogen.

2. A method according to claim 1, wherein the injected hydrocarbon is diesel fuel.

3. A method according to claim 1 or 2, wherein the catalyst for selective reduction comprises one or more base metal catalysts, taken from the group consisting of vanadium, tungsten, cerium and manganese,
and one or more catalyst supports taken from the group consisting of titania, alumina and ceria
and said catalyst for selective reduction is having the form of a monolith, a foam or a metal mesh.

4. A method according to claim 1 or 2, wherein the catalyst for selective reduction comprises a zeolite such as a β zeolite or ZSM-5 zeolite, preferably a β zeolite or a ZSM-5 zeolite ion exchanged with Cu and/or Fe
and an inert support such as a cordierite catalyst support and said catalyst for selective reduction is having the form of a monolith, a foam or a metal mesh.

5. A method according to claim 3, wherein the catalyst for selective reduction is vanadium/tungsten oxide on a titania support, cerium/tungsten oxide on a titania support or manganese oxide on a titania support.

6. A method according to claim 1 to 5, wherein the oxidation catalyst is one or more precious metals and/or one or more base metals on a catalyst support of a zeolite or a metal oxide, the catalyst having the form of a monolith, a foam or a metal mesh.

7. A method according to claim 6, wherein the support for the oxidation catalyst is a zeolite, titania, alumina, ceria or zirconia, and wherein the oxidation catalyst precious metal when present is platinum, palladium and/or rhodium and the catalyst base metal when present is manganese, copper, cobalt and/or chromium.

8. A method according to claim 7, wherein the oxidation catalyst is platinum on a titania support or platinum/palladium on a titania support.

9. A method according to claims 1 to 8, wherein the catalyst coated on the filter is a precious metal, but not including platinum, on a catalyst support of a metal oxide.

10. A method according to claims 9, wherein the support for the catalyst coated on the filter is titania, alumina, ceria or zirconia, and the catalyst coated on the filter is palladium.

11. A method according to claim 10, wherein the catalyst coated on the filter is palladium on a titania support.

12. A method according to any of the claims 1-11, further comprising the step of a pre-oxidation of carbon monoxide, particulate matter, nitrogen oxides and incompletely combusted hydrocarbons in the exhaust gas from the engine in the presence of a pre-oxidising catalyst active in oxidising the carbon monoxide, nitrogen oxides, hydrocarbons, and particulate matter to carbon dioxide, nitrogen dioxide and water prior to the step (a).

13. A method according to claim 12, wherein the pre-oxidising catalyst is one or more precious metals or one or more base metals on a catalyst support of a zeolite or of an oxide of one or more metals, the pre-oxidising catalyst having the form of a monolith, a foam or a metal mesh.

14. A method according to claim 13, wherein the pre-oxidising catalyst support is one or more oxides of aluminium, cerium, zirconium and/or titanium, and the pre-oxidising catalyst precious metal is platinum and/or palladium and the pre-oxidising catalyst base metal is manganese, copper, cobalt and/or chromium.

15. A method according to claim 14 wherein the pre-oxidising catalyst is platinum/palladium on an aluminium oxide/cerium oxide support.

## Patentansprüche

1. Verfahren zum Entfernen von Unreinheiten in Abgas aus einem Dieselmotor, wobei die Unreinheiten Stickstoffoxide, Kohlenmonoxid, teilchenförmiges Material und unvollständig verbrannte Kohlenwasserstoffe umfassen,
wobei das Verfahren folgende Schritte umfasst:
(a) Einspritzen eines Reduktionsmittels, das Harnstoff oder Ammoniak umfasst, in das Abgas aus dem Motor;
(b) Reduzieren der Stickstoffoxide in dem Abgas durch das Reduktionsmittel unter Vorhandensein eines Katalysators zur selektiven Reduzierung, der bei der selektiven Reduzierung von Stickstoffoxiden zu Stickstoff aktiv ist;
(c) intermittierende Einspritzung eines Kohlenwasserstoffs in das Abgas aus Schritt (b);
(d) Oxidation von Kohlenmonoxid, teilchenförmigem Material, unvollständig verbrannten Kohlenwasserstoffen und eingespritztem Kohlenwasserstoff unter Vorhandensein eines Oxidationskatalysators, der bei der Oxidierung von Kohlenmonoxid, teilchenförmigem Material und Kohlenwasserstoffen zu Kohlendioxid und Wasser aktiv ist, wobei der Oxidationskatalysator bei der selektiven Oxidierung eines möglichen Überschusses an Reduktionsmittel zu freiem Stickstoff ebenfalls aktiv ist;
(e) Filtrierung des Abgases aus Schritt (d) durch Hindurchlaufenlassen des Gases durch einen Filter, auf den ein Katalysator aufbeschichtet ist, wobei das verbleibende teilchenförmige Material im Filter zurückbehalten wird, und wobei der auf den Filter aufbeschichtete Katalysator bei der Oxidierung von Kohlenmonoxid, teilchenförmigem Material und Kohlenwasserstoffen zu Kohlendioxid und Wasser aktiv ist, wodurch ein gereinigtes Abgas erzeugt wird; und
(f) Entfernen des gereinigten Abgases;
**dadurch gekennzeichnet, dass** der auf den Filter aufbeschichtete Katalysator bei der selektiven Oxidierung eines möglichen Überschusses an Reduktionsmittel zu freiem Stickstoff ebenfalls aktiv ist.

2. Verfahren nach Anspruch 1, wobei der eingespritzte Kohlenwasserstoff Dieselkraftstoff ist.

3. Verfahren nach Anspruch 1 oder 2, wobei der Katalysator zum selektiven Reduzieren eine oder mehrere Basismetallkatalysatoren umfasst, entnommen aus der Gruppe bestehend aus Vanadium, Wolfram, Cerium und Mangan,
und einen oder mehrere Katalysatorenträger aus der Gruppe bestehend aus Titandioxid, Aluminiumdioxid und Ceroxid entnommen sind,
und der Katalysator zum selektiven Reduzieren in Form eines Monoliths, eines Schaums oder eines Metallnetzes vorliegt.

4. Verfahren nach Anspruch 1 oder 2, wobei der Katalysator zum selektiven Reduzieren ein Zeolith wie ein β-Zeolith oder ein ZSM-5-Zeolith umfasst, vorzugsweise ein β-Zeolith oder ein ZSM-5-Zeolith, ionenausgetauscht mit Cu und/oder Fe,
und einen inerten Träger wie einen Kordierit-Katalysatorträger, wobei der Katalysator zum selektiven Reduzieren in Form eines Monoliths, eines Schaums oder eines Metallnetzes vorliegt.

5. Verfahren nach Anspruch 3, wobei der Katalysator zum selektiven Reduzieren Vanadium/Wolframoxid auf einem Titandioxidträger, Cerium/Wolframoxid auf einem Titandioxidträger oder Manganoxid auf einem Titandioxidträger ist.

6. Verfahren nach Anspruch 1 bis 5, wobei der Oxidationskatalysator aus einem oder mehreren Edelmetallen und/oder einem oder mehreren Basismetallen auf einem Katalysatorträger aus einem Zeolith oder einem Metalloxid besteht, wobei der Katalysator in Form eines Monoliths, eines Schaums oder eines Metallnetzes vorliegt.

7. Verfahren nach Anspruch 6, wobei der Träger für den Oxidationskatalysator ein Zeolith, Titandioxid, Aluminiumdioxid, Ceroxid oder Zirkoniumdioxid ist, und wobei das Edelmetall des Oxidationskatalysators bei Vorhandensein Platin, Palladium und/oder Rhodium ist und das Katalysatorbasismetall bei Vorhandensein Mangan, Kupfer, Kobalt und/oder Chrom ist.

8. Verfahren nach Anspruch 7, wobei der Oxidationskatalysator Platin auf einem Titandioxidträger oder Platin/Palladium Titandioxidträger ist.

9. Verfahren nach den Ansprüchen 1 bis 8, wobei der auf den Filter aufbeschichtete Katalysator ein Edelmetall ist, jedoch nicht einschließlich Platin, auf einem Katalysatorträger aus einem Metalloxid.

10. Verfahren nach den Ansprüchen 9, wobei der Träger für den auf den Filter aufbeschichteten Katalysator Titandioxid, Aluminiumdioxid, Ceroxid oder Zirkoniumdioxid ist und der auf den Filter aufbeschichtete Katalysator Palladium ist.

11. Verfahren nach Anspruch 10, wobei der auf den Filter aufbeschichtete Katalysator Palladium auf einem Titandioxidträger ist.

12. Verfahren nach einem der Ansprüche 1-11, das ferner den Schritt einer Voroxidation von Kohlenmonoxid, teilchenförmigem Material, Stickstoffoxiden und unvollständig verbrannten Kohlenwasserstoffen in dem Abgas aus dem Motor unter Vorhandensein eines voroxidierenden Katalysators, der beim Oxidieren des Kohlenmonoxids, der Stickstoffoxide, Kohlenwasserstoffe und des teilchenförmigen Materials zu Kohlendioxid, Stickstoffdioxid und Wasser vor Schritt (a) aktiv ist.

13. Verfahren nach Anspruch 12, wobei der voroxidierende Katalysator ein oder mehrere Edelmetalle oder ein oder mehrere Basismetalle auf einem Katalysatorträger aus einem Zeolith oder aus einem Oxid von einem oder mehreren Metallen ist, wobei der voroxidierende Katalysator in Form eines Monoliths, eines Schaums oder eines Metallnetzes vorliegt.

14. Verfahren nach Anspruch 13, wobei der voroxidierende Katalysatorträger ein oder mehrere Oxide von Aluminiumdioxid, Ceroxid, Zirkoniumdioxid und/oder Titandioxid ist, und wobei das Edelmetall des voroxidierenden Katalysators Platin und/oder Palladium ist und das Basismetall des voroxidierenden Katalysators Mangan, Kupfer, Kobalt und/oder Chrom ist.

15. Verfahren nach Anspruch 14, wobei der voroxidierende Katalysator Platin/Palladium auf einem Aluminiumoxid/Ceriumoxidträger ist.

## Revendications

1. Procédé d'élimination des impuretés dans le gaz d'échappement d'un moteur diesel, les impuretés comprenant des oxydes d'azote, du monoxyde de carbone, des matières particulaires et des hydrocarbures dont la combustion est incomplète,
lequel procédé comprend les étapes de
(a) injection d'un agent de réduction comprenant de l'urée ou de l'ammoniac dans le gaz d'échappement provenant du moteur ;
(b) réduction des oxydes d'azote dans le gaz d'échappement par l'agent de réduction en présence d'un catalyseur pour une réduction sélective, étant actif dans la réduction sélective des oxydes d'azote en azote ;
(c) injection intermittente d'un hydrocarbure dans l'effluent provenant de l'étape (b)
(d) oxydation du monoxyde de carbone, des matières particulaires, des hydrocarbures dont la combustion est incomplète et de l'hydrocarbure injecté en présence d'un catalyseur d'oxydation actif dans l'oxydation du monoxyde de carbone, des matières particulaires et des hydrocarbures, en dioxyde de carbone et eau et le catalyseur d'oxydation étant également actif dans l'oxydation sélective de l'excès éventuel d'agent de réduction en azote libre ;
(e) filtration de l'effluent provenant de l'étape (d) en faisant passer le gaz à travers un filtre sur lequel un catalyseur est enduit, dans lequel les matières particulaires résiduelles sont retenues dans le filtre et dans lequel le catalyseur enduit sur le filtre est actif dans l'oxydation du monoxyde de carbone, des matières particulaires et des hydrocarbures en dioxyde de carbone et eau, créant un gaz d'échappement purifié ; et
(f) retrait du gaz d'échappement purifié ;
**caractérisé en ce que** le catalyseur enduit sur le filtre est également actif dans l'oxydation sélective de l'excès éventuel d'agent de réduction en azote.

2. Procédé selon la revendication 1, dans lequel l'hydrocarbure injecté est du carburant diesel.

3. Procédé selon la revendication 1 ou 2, dans lequel le catalyseur pour la réduction sélective comprend un ou plusieurs catalyseurs métalliques de base, choisis dans le groupe constitué de vanadium, tungstène, cérium et manganèse
et un ou plusieurs supports de catalyseur choisis dans le groupe constitué d'oxyde de titane, alumine et oxyde de cérium
et ledit catalyseur pour la réduction sélective se trouve sous la forme d'un monolithe, d'une mousse ou d'un treillis métallique.

4. Procédé selon la revendication 1 ou 2, dans lequel le catalyseur pour la réduction sélective comprend une zéolite telle que la zéolite β ou la zéolite ZSM-5, de préférence une zéolite β ou une zéolite ZSM-5 dont les ions ont été échangés avec Cu et/ou Fe
et un support inerte tel qu'un support de catalyseur en cordiérite et ledit catalyseur pour la réduction sélective se trouve sous la forme d'un monolithe, d'une mousse ou d'un treillis métallique.

5. Procédé selon la revendication 3, dans lequel le catalyseur pour la réduction sélective est un oxyde de vanadium/tungstène sur un support en oxyde de titane, un oxyde de cérium/tungstène sur un support en oxyde de titane ou un oxyde de manganèse sur un support en oxyde de titane.

6. Procédé selon la revendication 1 ou 5, dans lequel le catalyseur d'oxydation est un ou plusieurs métaux précieux et/ou un ou plusieurs métaux de base sur un support de catalyseur d'une zéolite ou d'un oxyde métallique, le catalyseur ayant la forme d'un monolithe, d'une mousse ou d'un treillis métallique.

7. Procédé selon la revendication 6, dans lequel le support pour le catalyseur d'oxydation est une zéolite, de l'oxyde de titane, de l'alumine, de l'oxyde de cérium ou de la zircone et dans lequel le métal précieux du catalyseur d'oxydation lorsqu'il est présent est le platine, le palladium et/ou le rhodium et le métal de base du catalyseur lorsqu'il est présent est le manganèse, le cuivre, le cobalt et/ou le chrome.

8. Procédé selon la revendication 7, dans lequel le catalyseur d'oxydation est le platine sur un support en oxyde de titane ou le platine/palladium sur un support en oxyde de titane.

9. Procédé selon les revendications 1 à 8, dans lequel le catalyseur enduit sur le filtre est un métal précieux, mais ne comprenant pas de platine, sur un support de catalyseur d'un oxyde métallique.

10. Procédé selon la revendication 9, dans lequel le support pour le catalyseur enduit sur le filtre est l'oxyde de titane, l'alumine, l'oxyde de cérium ou la zircone et le catalyseur enduit sur le filtre est le palladium.

11. Procédé selon la revendication 10, dans lequel le catalyseur enduit sur le filtre est le palladium sur un support en oxyde de titane.

12. Procédé selon l'une quelconque des revendications 1 à 11, comprenant en outre l'étape de pré-oxydation du monoxyde de carbone, des matières particulaires, des oxydes d'azote et des hydrocarbures dont la combustion est incomplète dans les gaz d'échappement du moteur en présence d'un catalyseur de pré-oxydation actif dans l'oxydation du monoxyde de carbone, des oxydes d'azote, des hydrocarbures et des matières particulaires en dioxyde de carbone, dioxyde d'azote et eau avant l'étape (a).

13. Procédé selon la revendication 12, dans lequel le catalyseur de pré-oxydation est un ou plusieurs métaux précieux ou un ou plusieurs métaux de base sur un support de catalyseur d'une zéolite ou d'un oxyde d'un ou de plusieurs métaux, le catalyseur de pré-oxydation ayant la forme d'un monolithe, d'une mousse ou d'un treillis métallique.

14. Procédé selon la revendication 13, dans lequel le support de catalyseur de pré-oxydation est un ou plusieurs oxydes d'aluminium, de cérium, de zirconium et/ou de titane et le métal précieux du catalyseur de pré-oxydation est le platine et/ou le palladium et le métal de base du catalyseur de pré-oxydation est le manganèse, le cuivre, le cobalt et/ou le chrome.

15. Procédé selon la revendication 14, dans lequel le catalyseur de pré-oxydation est le platine/palladium sur un support d'oxyde d'aluminium/oxyde de cérium.
